(19)

Europäisches
Patentamt
European
Patent Office
Office européen
des brevets

(11) **EP 2 017 647 A1**

(12) **EUROPEAN PATENT APPLICATION**

(43) Date of publication:
**21.01.2009 Bulletin 2009/04**

(51) Int Cl.:
***G01S 13/90*** *(2006.01)*

(21) Application number: **08425447.3**

(22) Date of filing: **25.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Fornaro, Gianfranco**<br>  **80124 Napoli (NA) (IT)**<br>• **Serafino, Francesco**<br>  **80124 Napoli (NA) (IT)**<br>• **Soldovieri, Francesco**<br>  **80124 Napoli (NA) (IT)** |
| (30) Priority: **19.07.2007 IT RM20070399** | (74) Representative: **Iannone, Carlo Luigi et al**<br>**Barzanò & Zanardo Roma S.p.A.**<br>**Via Piemonte 26**<br>**00187 Roma (IT)** |
| (71) Applicant: **Consiglio Nazionale delle Ricerche**<br>**00185 Roma (IT)** | |

(54) **Method for processing data sensed by a synthetic aperture radar (SAR) and related remote sensing system**

(57)    The present invention relates to a method for processing data sensed by a synthetic aperture radar, said radar comprising one or more sensors ($A_1$, ..., $A_M$) making a plurality of orbits $O_n$, with n=1, ..., N, along which each one makes a plurality of detections of at least one area, at a radiation having a pre-set wavelength $\lambda$, so as to obtain an assembly of multipassage data making NxM images of said at least one area, each one comprised of a plurality of pixels, said method comprising preliminarily focusing of said assembly of multipassage data detected in azimuth and range variables and is characterized in that it then focuses with respect to elevation s and velocity v variables, according to the singular value decomposition technique.

    The present invention further relates to a remote sensing synthetic aperture radar system.

Fig. 1

EP 2 017 647 A1

**Description**

The present invention relates to a method for processing data sensed by synthetic aperture radar (SAR) and related remote sensing system.

More specifically, the invention concerns a method for processing data arriving by synthetic aperture radar sensors, able focusing data within a 4D domain (space - speed), based on inversion algorithms exploiting decomposition into singular values (SVD) of data-unknown connection, so as to permit localization and monitoring of slow movements of ground targets.

As it is well known, at present synthetic aperture radar (SAR) are widely employed in the remote sensing field. In fact, they are well known technological advantages of this sensing technique, permitting obtaining high resolution images even with small antennas.

Thus, SAR is an active sensor, usually provided on aircrafts and satellites, operating at microwave frequencies, in correspondence of which interaction with water molecules are limited as far as signal attenuation is concerned. Instrument is thus able to produce night and day images, and with every weather condition.

Data sensed by SAR are subjected to complex post-processing procedures, generally based on Fourier transform, very efficient in permitting target detection.

At present, in this field it is present a strong development of fusion techniques coherent with acquired synthetic aperture radar (SAR) data, with different view and time, in following passages of the sensor on the scene, in order to localize targets in the 3D space and measuring possible slow deformations.

Said measurements are presently obtained by tomographic techniques, as far as the spatial reconstruction is concerned, or by solutions deriving Differential Interferometry SAR (DinSAR), known by the name of Permanent Scatterers (PS) or even Persistent Scatterers Interferometry (PSI) in case of monitoring of target deformations corresponding to strong scatterers.

Tomographic techniques permit generating tridimensional images wherein it is added to the spatial coordinates of range SAR images (range is measure of distance along view line from radar to lightened object) and azimuth (along sensor movement line), the elevation direction, using a synthesis criteria according to the elevation direction, similar to the one employed for azimuth focusing, that can be obtained after a plurality of passages of sensor in a corresponding plurality of different trajectories.

Application of inversion method based on Decomposition of Singular Values (see G. Fornaro, F. Serafino e F. Soldovieri, "Three Dimensional Focusing With Multipass SAR Data", IEEE Trans. Geosci. Remote Sens., vol. 41, pp. 507-517, 2003 e G. Fornaro, e F. Serafino, "Imaging of Single and Double Scatterers in Urban Areas via SAR Tomography", IEEE Trans. Geosci. Remote Sens., December 2006, vol. 44, no.12, 3497-35059) permitted obtaining more robust reconstructions and better resolutions with respect to those obtained by the most elementary procedure of beam forming (Beam - Forming BF technique).

Thus, SAR tomography has the advantage of permitting not only accurate localization of single scatterers points, but also of separating in elevation interfering contributions in the same resolution cell, due to overlapping linked to geometry and irregularity of altimetry profile. In other words, it permits an elevation scanning of scene scattering features. However, it is characterized by the disadvantage of not permitting measurement of possible slow ground movements. In other words, reconstruction is only relevant to space.

Multipassage DInSAR or PSI techniques have been suggested (see A. Ferretti, C., Prati, and F. Rocca, "Nonlinear subsidence rate estimation using the permanent scatterers in differential SAR interferometry", IEEE Trans. Geosci. Remote Sens., vol. 38(5), pp. 2202-2212, 2000) based on the use only of the phase of signal recorded and modeling running in function of the position and of the speed of a single radar target. Determination of velocity is a preliminary step to individuation of possible displacement of target developing according to a non linear law with respect to the time.

Disadvantage of this law is surely due to the use only of the step of received signal and to impossibility of separating interfering contributes.

In order to exploit advantages of the tomography and differential interferometry techniques, it has been recently introduced a technique known as differential tomography (see F. Lombardini, "Differential Tomography: a New Framework for SAR Interferometry", IEEE Trans. Geosci. Remote Sens, vol. 43 (1), pp. 37-44, Jan. 2005). Differential tomography is based on principle of focusing of radar signal within an elevation and velocity domain: for this reason, said technique is also known as 4D focusing or 4D imaging. Besides the more elementary Beam - Forming technique, methods suggested for 4D imaging are taken from array-processing field, and are of the adaptive and non linear statistic kind (e.g. Capon filters).

SAR differential tomography technique thus permits exploiting all amplitude and phase signal information received and theoretically separating quotes and velocity of targets interfering within a resolution cell. Even showing high resolution and accuracy degrees, statistic inversion methods suggested for realizing SAR differential tomography make suitable spatial "averaging" according to the azimuth and range direction in order to obtain features in terms of correlations necessary to imaging.

From the above is clear that known data processing technologies have limitations in localization and monitoring of slow movements of ground targets.

In view of the above, it is object of the present invention that of suggesting a method for processing data sensed by synthetic aperture radar (SAR) permitting accurately localizing and monitoring slow movements of ground targets by 4D imaging techniques.

A further object of the present invention is that of permitting operating with full resolution, without making spatial averages along the range and azimuth directions.

It is therefore specific object of the present invention a method for processing data sensed by a synthetic aperture radar, said radar comprising one or more sensors making a plurality of orbits $O_n$, with n=1, ..., N, along which each one makes a plurality of detections of at least one area, each detection being carried out for time references $t_{nm}$, n=1, ..., N and m= 1, ..., M, emitting a radiation having a pre-set wavelength A, so as to obtain an assembly of multipassage data making NxM images of said at least an area, each one comprised of a plurality of pixel, said method comprising the following steps:

(a) focalizing said assembly of sensed multipassage data in azimuth and range variables;

(b) aligning at the spatial level, with respect to said azimuth and range variables, NxM-1 of said images with respect to a reference image to which a reference orbit is associated;

(c) determining for each pixel of each image geometric distances of each one of said one or more sensors ($A_1$, ..., $A_M$) in each one of said orbits by a reference altimetry digital map;

(d) subtracting, for each pixel of each image, step corresponding to distances calculated for each sensor ($A_1$, ..., $A_M$) in each one of said orbits; and

(e) determining matrix of basic lines $b_{inm}$, n=1, ..., N; m=1, ..., M for each reference time $t_{nm}$ for n=1, ..., N and m=1, ..., M, for each sensor ($A_1$, ..., $A_M$) on each one of said orbits, said basic lines $b_{inm}$ being parallax distances of each single acquisition with respect to said reference orbit, characterized in that it further comprises the following steps:

(f) calculating spatial $\zeta_{nm}$ and time $k_{nm}$ frequency matrixes corresponding to the acquisitions obtained as $\zeta_{nm}=2b_{inm}/(\lambda \mathbf{r})$ and $k_{nm}=2f_{nm}/\lambda$, and

(g) focalizing with respect to elevation s and velocity v variables, inverting for each pixel of each sensed image matrix of sensed pixel $g_{nm}$, n=1, .., N, m=1, ..., M, wherein $g_{nm}$ is the signal of a pixel for each one of said time references $t_{nm}$ and each sensor $A_m$ having a base line $b_{inm}$ calculated with respect to the reference one in a generic pixel of reference image according to the relation:

$$g_{nm} = g(t_{nm}, b_{\perp nm}) = \iint \gamma(s,v) \exp\left[j2\pi\zeta_{nm}s + j2\pi\kappa_{nm}v\right] ds\, dv$$

so as to obtain distribution function of back scattering coefficient $\gamma(s, v)$ in elevation s and velocity v according to singular values decomposition technique.

Always according to the invention, said step (g) can comprise the following sub-steps:

(g1) defining linear operator L:

$$\mathbf{g} = g(t_{nm}, b_{\perp nm}) = L\gamma(s,v) \quad n=1,...,N \text{ e } m= 1,...,M;$$

(g2) discretising matrix L;

(g3) solving problem of eigenvalues

$$L^* L v_k(s,v) = \sigma_k^2 v_k(s,v)$$

$$LL^* \mathbf{u}_k = \sigma_k^2 \mathbf{u}_k$$

wherein $\{v_k(s,v)\}_{k=1}^{NxM}$ and $\{\mathbf{u}_k\}_{k=1}^{NxM}$ are respectively an orthonormal base in X and Y subspaces, said X and Y subspaces being respectively spaces of unknown and data of said operator L, and $\{v_k(s,v)\}_{k=1}^{NxM}$ defines a base for subspace equal to the orthogonal complement of null space of operator L and $\{\mathbf{u}_k\}_{k=1}^{NxM}$ defines an orthonormal base for operator L range; and

(g4) calculating distribution function of back scattering coefficient γ (s, v) in elevation s and velocity v composes base functions according to set weights also on the basis of singular values according to formula:

$$\gamma(s,v) = \sum_{k=1}^{NxM} \sigma_k^{-1} \langle \mathbf{g}, \mathbf{u}_k \rangle_Y \, v_k(s,v)$$

Still according to the invention, step (g2) can comprise the following substeps:

- fixing an elevation searching range, preferably symmetric with respect to zero $(-s_M, s_M)$
- fixing a velocity searching range, preferably symmetric with respect to zero $(-v_N, v_M)$
- representing distribution function of back scattering coefficient γ (s, v) discretised on rectangular domains, or pixels, having side $\Delta_s$ and $\Delta_v$ along variables s and v, as:

$$\gamma(s,v) = \sum_{p=0}^{N_s-1} \sum_{q=0}^{N_v-1} \gamma_{pq} \Pi(s - s_M - p\Delta_s) \Pi(v - v_M - q\Delta_v)$$

wherein $N_s$ and $N_v$ take into consideration the number of subdivisions along s and v, respectively, and $\Pi_s$ and $\Pi_v$ are window functions in $(0, \Delta_s)$ and $(0, \Delta_v)$; and

- defining matrix L, comprised of NxM, n=1, ..., N and m=1, ..., M lines and $N_s$x$N_v$ columns, as:

$$l_{ik} = \exp\left[ j2\pi \zeta_i (s_M + p\Delta_s) + j2\pi \kappa_i (v_M + q\Delta_v) \right]$$

with i=1, ..., NxM and k=1, ..., $N_s$x$N_v$ and $p = k - q \lfloor k/Ns \rfloor$, being $\lfloor \cdot \rfloor$ the function taking the whole part.

Advantageously according to the invention, said method can further comprise the following substep:

(g5) stopping summation $\gamma(s,v) = \sum_{k=1}^{NxM} \sigma_k^{-1} \langle \mathbf{g}, \mathbf{u}_k \rangle_Y \, v_k(s,v)$ at an index P, so as P≤NxM, corresponding to transition between flat zone of singular values and the one with an exponential decay.

Furthermore according to the invention, said method can further comprise the following substep

(g5) adjusting said distribution function of back scattering coefficient γ (s, v) in elevation (s) and velocity (v) as:

$$\gamma(s,v) = \sum_{k=1}^{NxM} \frac{\sigma_k}{\sigma_k^2 + \alpha} \langle \mathbf{g}, \mathbf{u}_k \rangle_Y \, v_k(s,v)$$

with a global minimum of functional given by:

$$\Phi_\alpha[\gamma] = \|L\gamma - \mathbf{g}\|_Y^2 + \alpha \|\gamma\|_X^2,$$

wherein α is a parameter apt to set regularisation level.

Always according to the invention, said parameter α can be obtained by constraints on solution E energy and on noise energy ε, so that

$$\|L\gamma - \mathbf{g}\|_Y \le \varepsilon, \quad \|\gamma\|_X \le E$$

With a solution given by $\alpha = (\varepsilon/E)^2$.

Still according to the invention, said method can further comprise the following step:

(h) identifying elevation (s) and velocity (v) of one or more targets interfering in the same pixel of the detected images.

Preferably, according to the invention, said step (h) can comprise the following substeps:

(h1) measuring correlation in the elevation - velocity domain (s, v) between real response and the response of an ideal target © at variable height and velocity:

$$\langle \gamma(s,v), \gamma_x(s,v;s_0,v_0) \rangle_X = c(s_0,v_0)$$

wherein $\gamma_s(s,v;s_0,v_0)$ is reconstruction of a pulse centred in (so, $v_0$), obtained from data $g_{nm} = \exp[j2\pi\zeta_{nm}s_0 + j2\pi\kappa_{nm}v_0]$ and $\langle *, * \rangle_X$ realises a scalar product within said space X of unknown of said operator L, and

(h2) maximising said scalar product with respect to $s_0$, $v_0$.

Still according to the invention, said step (h) can further comprise the following substeps:

(h3) measuring correlation within elevation-velocity domain (s, v) between real response and the response of one or more ideal targets ($c_i$) at variable height and velocity:

$$\left\langle \gamma(s,v), \gamma_s(s,v;s_0,v_0) + \sum_i a_i \gamma_s(s,v;s_i,v_i) \right\rangle_X = c(s_0,v_0,s_1,v_1,a_1,...,s_i,v_i,a_i)$$

wherein $(*, *)_x$ realises a scalar product in said space X of unknown of said operator L and $a_i$ is back scattering coefficient of target in $s_i$, $v_i$, normalised with respect to the one in $s_0$, $v_0$; and

(h4) maximising said scalar product with respect to $s_0$, $v_0$, $s_1$, $v_1$, $a_1$,..., $s_i$, $v_i$, $a_i$.

Advantageously, according to the invention, said method can further comprise the following steps applied to one or more sub regions $P_i$ along elevation within the interval (-sum, sum) corresponding to one or more targets ($s_i$, $v_i$):

- defining function $\gamma^i(s,v)=\gamma(s,v) per (s,v) \in P_i$ and 0 elsewhere;
- applying said operator L to the function $\gamma^i(s-s_i,v-v_i)$; and
- organising steps of $L\gamma^i(s-s_i,v-v_i)$ in time for each one of the single targets individuated in each one of said regions $P_i$ so as to obtain non linear deformation components and thus the historical series of deformation of each target.

Preferably, according to the invention, functions $\gamma(s, v)$ can be obtained as projections of functional spaces.

Always according to the invention, said method can comprise after said step (d) the following step:

- compensating atmospheric agents estimated according to traditional techniques of multipassage data.

Still according to the invention, said at least one sensor can be comprised of an antenna (A).

Furthermore, according to the invention, each one of said sensors ($A_1$, ..., $A_M$) can acquire said data at the same time of the other data of said orbits $O_n$, with n=1, ..., N, so that $t_{n1} =...=t_{nM}$.

It is further object of the present invention a remote sensing synthetic aperture radar system, comprising at least one sensor, suitable to emit a radiation toward said at least one area and to receive return radiation; at least a transportation means, on which said sensor is placed, said transportation means making a plurality of passages on said area according to a plurality of trajectories; data storage means connected with said at least one sensor, apt storing data detected by the same; and means for processing data sensed by said at least a sensor, connected with said data storage means, characterised in that said processing means carry out the processing method of data sensed by synthetic aperture radar according to the above method on said data detected by said at least one sensor.

Always according to the invention, said system can comprise a plurality of sensors placed on a corresponding plurality of transportation means.

Still according to the invention, said at least one sensor can be an antenna.

Furthermore, according to the invention, said at least a transportation means can be a satellite or an airplane.

The present invention will be described for illustrative and not limitative purposes according to its preferred embodiments, with particular reference to the figures of the enclosed drawings, wherein:

figure 1 shows geometry of a preferred embodiment of the acquisition system according to the present invention according to a section orthogonal to the sensor flight trajectory;

figure 2 shows an example of distribution of single points determined by processing of a plurality of passages on a geographic area, obtained by a preferred embodiment of the data processing method according to the present invention;

figure 3 shows an example of localization and measurement of targets interfering in the same pixel obtained by the preferred embodiment of the data processing method according to the present invention; and

figure 4 shows an example of extraction of historical sequences of targets interfering in a same pixel, obtained by the preferred embodiment of the data processing method according to the present invention.

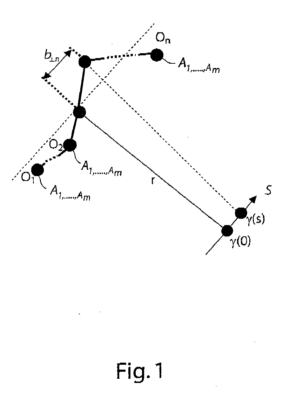

Making reference to figure 1, wherein it is represented geometry of the acquisition system in a section orthogonal to the sensor flight trajectory (constant azimuth), i.e. an antenna A, it is demonstrated that, for each set range r, and hypothesizing ignoring reciprocal diffraction and interaction between targets, relation existing between distribution of elevation s back scattering coefficient, indicated as $\gamma(s)$, and data $g_n$ acquired by one or more antennas, wherein $g_n$ is the signal for a pixel of the n image, after a suitable pre-processing of a amplitude and phase geometric calibration, is of the Fourier transform kind:

$$g_n = \int \gamma(s) \exp[j2\pi\zeta_n s]\, ds \qquad (1)$$

wherein frequencies $\zeta_n$, n=1, ..., N are $\xi_n = 2b_{\perp n}/(\lambda r)$, A is the wavelength of the incident radiation and quantity $b_{in}$, n=1, ..., N are parallax displacements, i.e. components of distance value of acquisitions of a reference orbit, orthogonal with respect to the view direction of the scene of the reference orbit. Said components are usually known as baselines.

Connection operator between data and unknown defined by equation (1) is of the linear and partially discrete kind and can be inverted by different techniques. The most used one is, as already said in the introduction of this specification, is known as "Beam - Forming" and is base on application of additional operator (conjugate transpose for matrix operator deriving from discretisation of equation (1).

Inventors have discovered that a regularised inversion based on Singular Value Decomposition (SVD) of operator connection in (1) permits taking into consideration an *a-priori* possible information about the investigation domain dimension (support of the back scattering unknown function). Furthermore, in presence of not uniform distribution of base lines, i.e. in case of a non uniform sampling of spectrum (which is typical in real acquisitions), technique based on SVD provides more robust reconstructions with respect to Beam-Forming techniques as far as lateral lobes reduction and noise stability.

Non linear adaptive inversion techniques can provide better performances for SVD technique, but they are less robust since they require high signal - noise ratios, and typically make azimuth and range averaging, thus permitting a lower spatial resolution with respect to the reconstructions based on SVD.

If it is wished reducing disturbances and noise, 3D reconstruction should be carried out by simultaneous acquisitions by antennas alignment. At present, examples exist of simultaneous acquisitions with a plurality of antennas only in case of aerial platform. By the present satellitar technology, orbitating systems are all characterised by the presence onboard of a single antenna.

At present, satellites have the feature of repeating orbit by a monthly cadenza. Exploiting repetition of orbits it is thus possible acquiring an assembly of data useful to 3D reconstruction.

In this case, antennas alignment is "sintetised" with following passages and it has been demonstrated by real data that it is possible recovering, on quite stable targets (typically anthropic structures), tridimensionality of investigation scene.

If acquisitions are sintetised at following times, it is possible combining topographic and differential approaches, exploiting 4D analyses and focalisation techniques (space/time or more precisely space/velocity) according to the present invention, basic idea of which, is that of formulating the problem of localising and monitoring targets from multipassage and multiview SAR data as a 4D imaging problem (elevation and velocity, besides azimuth and range), and particularly linear inversion of an operator of 2D Fourier transform for each azimuth and range pixel. Therefore, known 3d imaging concept is extended from multiview SAR data to time dimension and velocity variable (shifted by a suitable factor which is inversely proportional with respect to the wavelength) taking the spectral frequency meaning describing movement of targets on the ground. Thus, it is possible separating movements, even non linear movements, of targets eventually interfering in the same azimuth range at different heights.

On the basis of said formulation, 4D imaging method according to the present patent application suggest robust inversion of 2D Fourier transform operator (elevation and velocity) by the singular value decomposition technique, widely used in the linear problem inversion context.

Thus, indicating by $t_n$, n=1, ..., N, times when baselines $b_{in}$, n=1, ..., N are sintetised, wherein time reference is fixed with respect to the (synthetic) antenna to which also baselines are referred, and supposing that targets distributed along the elevation move all with the same linear velocity component according to the view direction, equal to , (1) can be written as follows:

$$\dot{g}_n = \exp[j2\pi\,\kappa_n v] \int \gamma(s)\,\exp[j2\pi\zeta_n s]\,ds \quad n=1,...N \qquad (2)$$

Wherein frequencies $k_n$ are given by ratio $2t_n/\lambda$. Exponential factor, depending on velocity, acts as disturbance element in application of tomographic techniques for 3D reconstruction.

Connection of (2) is still linear with $\gamma(s)$, but not linear with v. however, if time and baselines distributions are not "similar", i.e. if a linear dependency exists between $t_n$ and $b_{in}$, n=1, ..., N, it is possible estimating at the same time back scattering profile and target velocity.

Relation (2) can therefore be generalised to the case in which targets have non linear movements and thus not necessarily all following the same motion. Overlapping velocity harmonics and supposing placing other (N-1)M antennas (typically M in each one of the N passages) it is possible writing the following linear relation (n=1, ..., N, m=1, ..., M):

$$g_{nm} = g\left(t_{nm}, b_{\perp nm}\right) = \iint \gamma(s,v)\exp\left[j2\pi\zeta_{nm}s + j2\pi\,\kappa_{nm}v\right]ds\,dv \qquad (3)$$

putting into evidence a connection of double Fourier transformation. Relation (3) represents relation existing between data, i.e. among signals $g_{nm}$ sensed by each pixel of the n image and m antenna $A_m$, downward the pre-treatment, that will be better described in the following, and an elevation target distribution function $\gamma(s, v)$, that will be called back scattering coefficient distribution function, each one moving independently and not necessarily uniformly, for a system acquiring multitime and multiview data with time and baseline distributions respectively equal to $t_{nm}$ and $b_{inm}$, n=1, ..., N, m=1, ..., M. Thus, in case the system is a multistatic system, i.e. it is provided with M antennas acquiring simultaneous data, and making N following passages, it is obtained $t_m$, $= t_{n1} = ... t_{nm}$ for each orbit $O_n$.

Having said the above, the present invention relates to the application of linear inversion techniques based on Singular Value Decomposition (SVD) applied to multitime SAR data (observation repeated time by time) and multiview (observations made with different baselines) as described in the following.

Taking into consideration the case of a single sensing antenna, both for sake of simplicity and for analysing realistic cases with an application connected to the present satellitar technology not permitting multistatic acquisitions, relation (3) can be written again as:

$$\mathbf{g} = g\left(t_n, b_{\perp n}\right) = L\,\gamma(s, v)\;n=1,...N \qquad (4)$$

Wherein L is direct operator operating transformation from back scattering coefficient distribution function space $\gamma(s, v)$ (incognita) within a $L^2$ space, to data g of pixel f N images organised according to a vectorial shape as a complex element within a finite dimension space. Indicating by $(*, *)_x$ and $(*, *)_y$, respectively scalar products within the unknown and data space, in association with L it is defined the added operator as follows:

$$L^* : Y \rightarrow X \qquad \langle L\gamma(s, v), \mathbf{g}\rangle_Y = \langle \gamma(s, v), L^*\mathbf{g}\rangle_X \qquad (5)$$

that, developed, provides:

$$L^*\mathbf{g} = \sum_{n=1}^N \mathbf{g}_n \exp\left(-j2\pi\,\zeta_n s - j2\pi\,k_n v\right) \qquad (6)$$

Operator L admits a decomposition at singular values $\left\{\sigma_k,\,v_k(s, v),\,\mathbf{u}_k\right\}_{k=1}^N$ defined by the following problem at mixed eigenvalues:

$$L^*Lv_k(s,v) = \sigma_k^2 v_k(s,v) \qquad (7)$$

$$LL^{*}\mathbf{u}_{k} = \sigma_{k}^{2}\mathbf{u}_{k} \qquad (8)$$

wherein $\{v_{k}(s, v)\}_{k=1}^{N}$ and $\{\mathbf{u}_{k}\}_{k=1}^{N}$ respectively define an orthonormal base in subspaces X and Y. Particularly, $\{v_{k}(s, v)\}_{k=1}^{N}$ defines a base for underspace that is orthogonal complement to the null space of operator L; $\{\mathbf{u}_{k}\}_{k=1}^{N}$ defines an orthonormal base for operator L range.

Employing decompositions (7) and (8), operators L and L* can be decomposed as follows:

$$\mathbf{g} = \sum_{k=1}^{N}\sigma_{k}\langle\gamma(s,v),v_{k}(s,v)\rangle_{X}\mathbf{u}_{k} \qquad (9)$$

$$\gamma(s, v) = \sum_{k=1}^{N}\sigma_{k}^{-1}\langle\mathbf{g}, \mathbf{u}_{k}\rangle_{Y} v_{k}(s, v) \qquad (10)$$

Equation (10) permits defining inversion technique based on singular values. Particularly, examining equation (10) it is possible saying that incognita, i.e. back scattering coefficient distribution $\gamma$(s, v) function is reconstructed composing base functions according to weights set also on the basis of singular values.

Low singular values have a high weight in reconstruction and in case of noise can bring to unwished amplifications of disturbance.

It is well evident that running of singular values plays a basic role during reconstruction and SVD is a powerful instrument permitting analysing characteristics of linear operator in function of geometry of data acquired and of available information of the scene to be reconstructed. In fact, as already analysed in 3D tests, *a priori* information about the support of incognita function, in case of examination of dimensions of elevation and of admissible velocity interval, influence running of singular values permitting obtaining more robust reconstruction with a better resolution.

Generally speaking, running of singular values also states choose of reconstruction technique based on Singular Value Decomposition.

In case of an opposite problem, wherein singular values have a low dynamic for small indexes followed by an exponential decaying for bigger indexes, it is said a "severely" wrongly set problem. For this kind of problem, reconstruction is not dependent on signal - noise ratio of data and in this case it is convenient employing the inversion scheme based on the Truncated Singular Value Decomposition.

It comprises in stopping (Truncated Singular Value Decomposition or TSVD), summation of equation (10) at index P≤ N corresponding to transition between flat zone of singular values and the one with exponential decaying. In this way, it is obtained a suitable compromise between the needing of accuracy and resolution (obtained taking into consideration the value of P more closer to N) and stability with respect to noise (obtained taking into consideration limited values of P).

In case of dolce run of singular values with index, it is instead indicated as a "slightly" wrongly set problem. In this case, features of reconstruction meaning depend on Signal Noise Ratio (SNR) and is thus convenient employing regularisation methods based on windowing of singular values more articulated with respect to TSVD.

Particularly, interesting regularisation technique is the Tikhonov technique, wherein solution is obtained by:

$$\gamma(s,v) = \sum_{k=1}^{N}\frac{\sigma_{k}}{\sigma_{k}^{2} + \alpha}\langle\mathbf{g},\mathbf{u}_{k}\rangle_{Y} v_{k}(s,v) \qquad (11)$$

Representing minimum global of functional

$$\Phi_{\alpha}[\gamma] = \|L\gamma - \mathbf{g}\|_{Y}^{2} + \alpha\|\gamma\|_{X}^{2} \qquad (12)$$

wherein now the choice of parameter $\alpha$ determining regularization degree of the inversion scheme.

Particularly, in case of constraint both on solution energy and noise energy, which are mathematically translated into

$$\|L\gamma - \mathbf{g}\|_{Y} \leq \varepsilon, \quad \|\gamma\|_{X} \leq E \qquad (13)$$

an admissible solution, satisfying at the same time the two condition of equation (13) is given by the global minimum of functional (12) with $\alpha=(\varepsilon/E)^2$, i.e. from solution of equation (11) with $\alpha=(\varepsilon/E)^2$.

Numeric implementation of algorithm is obtained by the moment method. Set elevation searching range, $(-s_M, s_M)$ in figure 1, and velocity searching range $(-v_M, v_M)$, it is represented incognita $\gamma(s, v)$ in function of constant basis on rectangular domains (pixel) having side $\Delta_s$ and $\Delta_v$ along variables s and v respectively. In mathematical terms, incognita function is indicated as follows:

$$\gamma(s,v) = \sum_{p=0}^{N_s-1}\sum_{q=0}^{N_v-1} \gamma_{pq}\Pi(s - s_M - p\Delta_s)\Pi(v - v_M - q\Delta_v) \qquad (14)$$

Wherein $N_s$ and $N_v$ take into consideration the number of subdivisions along respectively s and v. $\Pi_s$ e $\Pi_v$ are window functions in $(0, \Delta_s)$ and $(0, \Delta_v)$.

Organising for elevation samples elements $\gamma_{pq}$ in a $\gamma$ vector (vector stacking), wherein k sample corresponds to indexes

$$q = \lfloor k/N_s \rfloor \quad p = k - q \lfloor k/N_s \rfloor \qquad (15)$$

wherein function $\lfloor \cdot \rfloor$ is the function taking the integer part, it is possible writing again equation (4) in a matrix form, apart from inessential constants, as follows:

$$g=L\gamma$$

wherein generic element of matrix L, comprised of N lines and $N_sN_v$ columns is given by

$$l_{nk} = \exp[j2\pi\zeta_n(s_M + p\Delta_s) + j2\pi\,\kappa_n(v_M + q\Delta_v)] \qquad (17)$$

with n=1, ..., N and k=1, ..., $N_sN_v$ and p and q are defined by equation (15).

Inversion provides decomposition into singular values of matrix L and reconstruction of $\gamma$ by the above regularisation techniques, i.e. TSVD and Tikhonov regularisation.

Starting from 4D domain reconstruction, it is possible implementing post-processing techniques in order to identify height and velocity both of single targets and of multiple targets interfering in the same pixel of images.

To this end, a simplified technique for identification of single targets provides correlation measure in the elevation - velocity domain between real response and the response of an ideal target at variable height and velocity:

$$\langle \gamma(s, v),\, \gamma_s(s - s_0, v - v_0)\rangle_X = c(s_0, v_0) \qquad (18)$$

wherein $(*, *)_X$ realises scalar product and $\gamma(s, v)$ is regularised reconstruction of an unitary pulse placed at the origin. In all pixels of image (azimuth - range) for which maximum correlation (in equation (18), maximum with respect to $s_0$ and $v_0$) is higher than a set threshold, it is assumed that presence of a single quota target. In each pixel, values $s_0$ and $v_0$, determining maximum of $c(s_0, v_0)$ represent average deformation elevation and velocity of target.

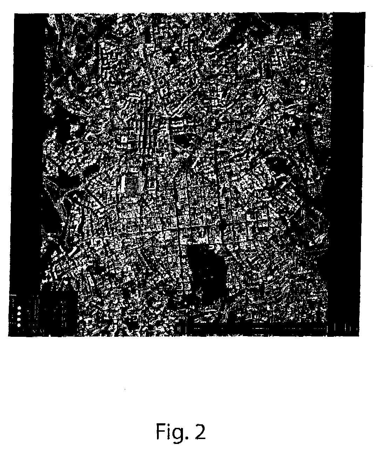

Accuracy by which target height is measured determines precision of localisation of the same. Figure 2 shows an example of distribution of single points determined processing 58 passages on Naples area overlapped to an orthophoto. Average velocity of targets is quantified and codified with different grey tones.

As for determination of single points, it is possible determining correlation level with double targets extending equation (18) at maximisation with respect to $s_0$, $v_0$, $s_1$, $v_1$ and a (ratio of back scattering coefficients) associated with single targets in the following way:

$$\langle \gamma(s,v),\gamma_s(s - s_0, v - v_0) + a\gamma_s(s - s_1, v - v_1)\rangle \qquad (19)$$

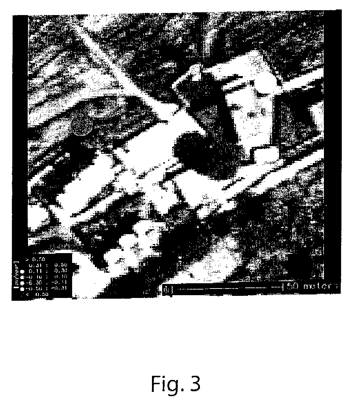

Figure 3 shows an example of localisation and measurement of targets interfering in the same pixel.

Suggested inventive solution can be applied to every kind of existing satellitar sensor, and particularly is aimed to multistatic system of the next generation that can be implemented thanks to satellite groups. In this way, it will be possible acquiring data at the same time with more than a single antenna and repeated in time. Particularly, supposing having a real alignment of M antennas observing at the same time the scene, what has been described in the above is still valid if NM product replaces N number (number of time acquisition), wherein n index ranges between 1 and NM, covering all available antennas, it also remains unmodified inversion method: data vector g will have NM elements and matrix L defined in equation (16) will present in this case a number of lines (NM) since it will describe data acquired from M antennas in each of N passages.

In this context they are included multistatic systems defined within the German "TanDEM-X" program and Italian "Sabrina" program.

As it can be observed, with respect to non linear inversion methods, the inventive method works with full resolution and thus does not require spatial averages. Further, basing on a regularised linear (deterministic) inversion, solution suggested is more robust with respect to low noise signal ratio problems.

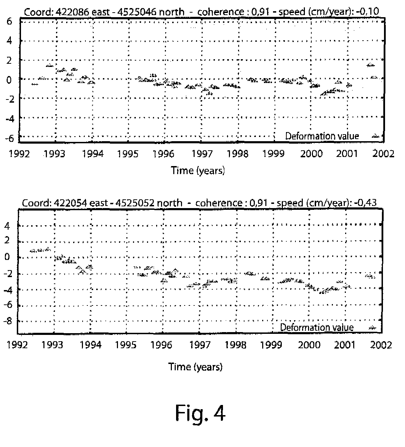

Finally, thanks to linearity of inversion, it is possible making a suitable filtering in the elevation - velocity domain aimed to extracting time sequences for monitoring non linear deformations both for singular targets and for interfering targets. Figure 4 shows an example of separation of historical series arriving from two targets interfering in the same pixel.

On the basis of the above, the preferred embodiment of method according to the present invention schematically presents the following steps:

### Preliminary steps

(a) azimuth and range focalisation of multipassage data set;

(b) alignment of images with respect to a main reference image. Thus obtained data assembly of NxM-1 sensed images, aligned with respect to a reference image, is generally referred as stack of Single Look Complex images (SLC);

(c) determination of geometrical distances (with respect to the range variable) of sensors with respect to a reference Altimetry Digital Map (Digital Elevation Model - MAP). Elevation numeric topographic maps are available permitting eliminating territory topographic contribution. In other words, it is made, for each pixel of each image, subtraction of the phase corresponding to distances calculated for each sensor ($A_1$, ..., $A_M$), this phase compensation, known as deramping, carried put between antenna or sensor and detection object with respect to the data of said Digital Elevation Model, implies that distribution of elevation will be referred to said Digital Elevation Model;

(d) calibration of amplitude of SLC image stack using ancillary information or standard techniques for calculating calibration coefficients;

(e) geometrical determination of baselines specifying parallax distances of each single acquisition with respect to the reference one;

(f) compensation of atmospheric patterns evaluated by traditional techniques from a multipassage data;

### Technique steps

(g) phase subtraction of geometric distance contribution from SLC image stack. Image stack is thus indicated in the following as "calibrated SLC stack";

(h) determination of spatial ($\zeta_{nm}$) and time ($k_{nm}$) frequencies corresponding to the acquisition thus obtained;

(i) construction of direct model matrix obtained by discretisation of unknown data connection;

$$g_{nm} = \iint \gamma(s,v) \exp\left[ j2\pi \zeta_{nm} s + j2\pi \kappa_{nm} v \right] ds\, dv = L\, \gamma(s,v)$$

wherein $g_m$ represents sample along orbit $O_n$ of m antenna in a generic azimuth and range pixel of the "calibrated SLC stack";

(l) decomposition into Singular Values of L matrix corresponding to operator L;

(m) regularised inversion of operator based on singular values and eigen vectors for reconstruction of vector $\gamma$ corresponding to discrete samples of function $\gamma(s, v)$ and application of reciprocal operator to each data vector comprised of available data samples $g_m$;

(n) analyses of reconstruction and extraction of elevations and velocity corresponding to dominant peak or peaks.

Said step can be implemented by correlations of the response obtained with the one ideally obtained by a point scatterer. Now, result permits localising and measuring average deformation velocity of scatterers on scene, eventually interfering into the resolution cell. Following steps permit extracting historical series for monitoring non linear deformation of the target;

(o) possible separation of elevation - velocity space obtained in separate regions in the elevation direction corresponding to a plurality of interfering targets in the resolution cell;

(p) compensation (zero steering) of estimated terms of velocity and elevation in space or subspace of target response;

(q) anti-transformation only in the velocity direction. Complex signals thus obtained represent residual responses of targets and, excluding noise contribution, present in phase a running proportional to the possible non linear deformation;

(r) extraction of phase sequence for generation of historical series.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for processing data sensed by a synthetic aperture radar, said radar comprising one or more sensors making a plurality of orbits $O_n$, with n=1, ..., N, along which each one makes a plurality of detections of at least one area, each detection being carried out for time references $t_{nm}$, n=1, ..., N and m= 1, ..., M, emitting a radiation having a pre-set wavelength A, so as to obtain an assembly of multipassage data making NxM images of said at least an area, each one comprised of a plurality of pixel, said method comprising the following steps:

   (a) focalizing said assembly of sensed multipassage data in azimuth and range variables;

   (b) aligning at the spatial level, with respect to said azimuth and range variables, NxM-1 of said images with respect to a reference image to which a reference orbit is associated;

   (c)determining for each pixel of each image geometric distances of each one of said one or more sensors ($A_1$, ..., $A_M$) in each one of said orbits by a reference altimetry digital map;

   (d) subtracting, for each pixel of each image, step corresponding to distances calculated for each sensor ($A_1$, ..., $A_M$) in each one of said orbits; and

   (e) determining matrix of basic lines $b_{inm}$, n=1, ..., N; m=1, ..., M for each reference time $t_{nm}$ for n=1, ..., N and m=1, ..., M, for each sensor ($A_1$, ..., $A_M$) on each one of said orbits, said basic lines $b_{inm}$ being parallax distances of each single acquisition with respect to said reference orbit, **characterized in that** it further comprises the following steps:

   (f) calculating spatial $\zeta_{nm}$ and time $k_{nm}$ frequency matrixes corresponding to the acquisitions obtained as $\zeta_{nm}=2b_{inm}/(\lambda r)$**and** $k_{nm}=2f_{nm}/\lambda$, and

   (g) focalizing with respect to elevation s and velocity v variables, inverting for each pixel of each sensed image matrix of sensed pixel $g_{nm}$, n=1, ..., N, m=1, ..., M, wherein $g_{nm}$ is the signal of a pixel for each one of said time references $t_{nm}$ and each sensor $A_m$ having a base line $b_{inm}$ calculated with respect to the reference one in a generic pixel of reference image according to the relation:

$$g_{nm} = g(t_{nm}, b_{\perp nm}) = \iint \gamma(s, v) \exp[j2\pi \zeta_{nm} s + j2\pi \kappa_{nm} v] ds\, dv$$

so as to obtaining distribution function of back scattering coefficient $\gamma$ (s, v) in elevation s and velocity v according to singular values decomposition technique.

2. Method according to claim 1, **characterized in that** said step (g) comprises the following sub-steps:

   (g1) defining linear operator L:

$$\mathbf{g} = g(t_{nm}, b_{\perp nm}) = L\, \gamma(s, v) \quad n=1,...,N \text{ e } m=1,...,M;$$

   (g2) discretising matrix L;

(g3) solving problem of eigenvalues

$$L^*Lv_k(s,v) = \sigma_k^2 v_k(s,v)$$

$$LL^*\mathbf{u}_k = \sigma_k^2 \mathbf{u}_k$$

wherein $\{v_k(s,v)\}_{k=1}^{N\times M}$ and $\{\mathbf{u}_k\}_{k=1}^{N\times M}$ are respectively an orthonormal base in X and Y subspaces, said X and Y subspaces being respectively spaces of unknown and data of said operator L, and $\{v_k(s,v)\}_{k=1}^{N\times M}$ defines a base for subspace equal to the orthogonal complement of null space of operator L and $\{\mathbf{u}_k\}_{k=1}^{N\times M}$ defines an orthonormal base for operator L range; and

(g4) calculating distribution function of back scattering coefficient γ *(s, v)* in elevation s and velocity v composes base functions according to set weights also on the basis of singular values according to formula:

$$\gamma(s,v) = \sum_{k=1}^{N\times M} \sigma_k^{-1} \langle \mathbf{g}, \mathbf{u}_k \rangle_Y \, v_k(s,v)$$

Still according to the invention, step (g2) can comprise the following substeps:

- fixing an elevation searching range, preferably symmetric with respect to zero (-$S_M$, $S_M$)
- fixing a velocity searching range, preferably symmetric with respect to zero (-$V_N$, $V_M$)
- representing distribution function of back scattering coefficient γ *(s, v)* discretised on rectangular domains, or pixels, having side $\Delta_s$ and $\Delta_v$ along variables s and v, as:

$$\gamma(s,v) = \sum_{p=0}^{N_s-1}\sum_{q=0}^{N_v-1} \gamma_{pq} \Pi(s - s_M - p\Delta_s)\Pi(v - v_M - q\Delta_v)$$

Wherein $N_S$ and $N_V$ take into consideration the number of subdivisions along s and v, respectively, and $\Pi_s$ and $\Pi_v$ are window functions in (0, $\Delta_s$) and (0, $\Delta_v$); and

- defining matrix L, comprised of NxM, n=1, ..., N and m=1, ..., M lines and $N_s$x$N_v$ columns, as:

$$l_{ik} = \exp\left[j2\pi\zeta_i(s_M + p\Delta_s) + j2\pi\kappa_i(v_M + q\Delta_v)\right]$$

With i=1, NxM and k=1, ..., $N_s$x$N_v$ and $p = k - q\lfloor k/N_S\rfloor$, being $\lfloor\cdot\rfloor$ the function taking the whole part.

3. Method according to claim 2, **characterised in that** step (g2) comprises the following substeps:

- fixing an elevation searching range, preferably symmetric with respect to zero (-$S_M$, $S_M$)
- fixing a velocity searching range, preferably symmetric with respect to zero (-$V_N$, $V_M$)
- representing distribution function of back scattering coefficient γ *(s, v)* discretised on rectangular domains, or pixels, having side $\Delta_s$ and $\Delta_v$ along variables s and v, as:

$$\gamma(s,v) = \sum_{p=0}^{N_s-1}\sum_{q=0}^{N_v-1} \gamma_{pq} \Pi(s - s_M - p\Delta_s)\Pi(v - v_M - q\Delta_v)$$

wherein $N_s$ and $N_v$ take into consideration the number of subdivisions along s and v, respectively, and $\Pi_s$ and $\Pi_v$ are window functions in (0, $\Delta_s$) and (0, $\Delta_v$); and

- defining matrix L, comprised of NxM, n=1, ..., N and m=1, ..., M lines and $N_s$x$N_v$ columns, as:

$$l_{ik} = \exp[j2\pi\zeta_i(s_M + p\Delta_s) + j2\pi\kappa_i(v_M + q\Delta_v)]$$

with i=1, ..., NxM and k=1, ..., $N_s$x$N_v$ and $p = k - q\lfloor k/N_s\rfloor$, being $\lfloor \cdot \rfloor$ the function taking the whole part.

4.  Method according to one of claims 2 or 3, **characterised in that** it further comprises the following substep:

(g5) stopping summation $\gamma(s,v) = \sum_{k=1}^{NxM} \sigma_k^{-1}\langle \mathbf{g}, \mathbf{u}_k\rangle_Y v_k(s,v)$ at an index P, so as P≤NxM, corresponding to transition between flat zone of singular values and the one with an exponential decay.

5.  Method according to one of claims 2 or 3, **characterised in that** it further comprises the following substep

(g5) adjusting said distribution function of back scattering coefficient γ (s, v) in elevation (s) and velocity (v) as:

$$\gamma(s,v) = \sum_{k=1}^{NxM} \frac{\sigma_k}{\sigma_k^2 + \alpha} \langle \mathbf{g}, \mathbf{u}_k\rangle_Y v_k(s,v)$$

with a global minimum of functional given by:

$$\Phi_\alpha[\gamma] = \|L\gamma - \mathbf{g}\|_Y^2 + \alpha\|\gamma\|_X^2,$$

wherein α is a parameter apt to set regularisation level.

6.  Method according to claim 5, **characterised in that** said parameter α is obtained by constraint on solution E energy and on noise energy ε, so that

$$\|L\gamma - \mathbf{g}\|_Y \le \varepsilon, \quad \|\gamma\|_X \le E$$

with a solution given by $\alpha = (\varepsilon/E)^2$.

7.  Method according to one of the preceding claims, **characterised in that** it further comprises the following step:

(h) identifying elevation (s) and velocity (v) of one or more targets interfering in the same pixel of the detected images.

8.  Method according to claim 7, **characterised in that** said step (h) comprises the following substeps:

(h1) measuring correlation in the elevation - velocity domain (s, v) between real response and the response of an ideal target © at variable height and velocity:

$$\langle \gamma(s,v), \gamma_s(s,v;s_0,v_0)\rangle_X = c(s_0,v_0)$$

wherein $\gamma_s(s,v;s_0,v_0)$ is reconstruction of a pulse centred in (so, $v_0$), obtained from data $g_{nm} = \exp[j2\pi\zeta_{nm}s_0 + j2\pi\kappa_{nm}v_0]$ and $\langle *, *\rangle_X$ realises a scalar product within said space X of unknown of said operator L, and
(h2) maximising said scalar product with respect to $s_0$, $v_0$.

9.  Method according to claim 8, **characterised in that** said step (h) further comprises the following substeps:

(h3) measuring correlation within elevation-velocity domain (s, v) between real response and the response of one or more ideal targets ($c_i$) at variable height and velocity:

$$\left\langle \gamma(s,v), \gamma_s(s,v;s_0,v_0) + \sum_i a_i \gamma_s(s,v;s_i,v_i) \right\rangle_X = c(s_0,v_0,s_1,v_1,a_1,...,s_i,v_i,a_i)$$

wherein $(*, *)_X$ realises a scalar product in said space X of unknown of said operator L and $a_i$ is back scattering coefficient of target in $s_i$, $v_i$, normalised with respect to the one in $s_0$, $v_0$; and

(h4) maximising said scalar product with respect to $s_0$, $v_0$, $s_1$, $v_1$,..., $s_i$, $v_i$, $a_i$.

10. Method according to one of the preceding claims, **characterised in that** said method further comprises the following steps applied to one or more sub regions $P_i$ along elevation within the interval $(-S_M, S_M)$ corresponding to one or more targets $(s_i, v_i)$:

- defining function $\gamma^i(s,v) = \gamma(s,v) per(s,v) \in P_i$ and 0 elsewhere;
- applying said operator L to the function $\gamma^i(s-s_i, v-v_i)$; and
- organising steps of $L\gamma^i(s-s_i, v-v_i)$ in time for each one of the single targets individuated in each one of said regions $P_i$ so as to obtain non linear deformation components and thus the historical series of deformation of each target.

11. Method according to claim 10, **characterised in that** functions $\gamma'(s, v)$ are obtained as projections of functional spaces.

12. Method according to one of the preceding claims, **characterised in that** it comprises, after said step (d), the following step:

- compensating atmospheric agents estimated according to traditional techniques of multipassage data.

13. Method according to one of the preceding claims, **characterised in that** said at least one sensor is comprised of an antenna (A).

14. Method according to one of the preceding claims 1 - 12, **characterised in that** each one of said sensors ($A_1$, ..., $A_M$) acquires said data at the same time of the other data of said orbits $O_n$, with n=1, ..., N, so that $t_{n1} = ... = t_{nM}$.

15. Remote sensing synthetic aperture radar system, comprising

at least one sensor ($A_1$, ..., $A_M$), suitable to emit a radiation toward said at least one area and to receive return radiation;
at least a transportation means, on which said sensor ($A_1$, ..., $A_M$) is placed, said transportation means making a plurality of passages on said area according to a plurality of trajectories;
data storage means connected with said at least one sensor ($A_1$, ..., $A_M$), apt storing data detected by the same; and
means for processing data sensed by said at least a sensor ($A_1$, ..., $A_M$), connected with said data storage means,

**characterised in that**
said processing means carry out the processing method of data sensed by synthetic aperture radar according to one of claims 1 - 11 on said data detected by said at least one sensor.

16. System according to claim 15, **characterized in that** it comprises a plurality of sensors ($A_1$, ..., $A_M$) placed on a corresponding plurality of transportation means.

17. System according to one of claims 15 or 16, **characterized in that** said at least one sensor is an antenna ($A_1$, ..., $A_M$).

18. System according to one of claims 15 - 17, **characterized in that** said at least a transportation means is a satellite.

19. System according to one of claims 15 - 17, **characterized in that** said at least a transportation means is an airplane.

Fig. 1

Fig. 2

Fig. 3

Coord: 422086 east - 4525046 north - coherence : 0,91 - speed (cm/year): -0,10

Time (years)

Coord: 422054 east - 4525052 north - coherence : 0,91 - speed (cm/year): -0,43

Time (years)

# Fig. 4

EP 2 017 647 A1

## EUROPEAN SEARCH REPORT

**Application Number**

EP 08 42 5447

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SERAFINO F ET AL: "Singular value decomposition applied to 4D SAR imaging" GEOSCIENCE AND REMOTE SENSING SYMPOSIUM, 2005. IGARSS '05. PROCEEDINGS . 2005 IEEE INTERNATIONAL SEOUL, KOREA 25-29 JULY 2005, PISCATAWAY, NJ, USA,IEEE, vol. 4, 25 July 2005 (2005-07-25), pages 2701-2704, XP010848560 ISBN: 978-0-7803-9050-8 * the whole document * | 1-19 | INV. G01S13/90 |
| Y,D | FORNARO G ET AL: "Three-dimensional focusing with multipass SAR data" IEEE TRANSACTIONS ON GEOSCIENCE AND REMOTE SENSING, IEEE SERVICE CENTER, PISCATAWAY, NJ, US, vol. 41, no. 3, 1 March 2003 (2003-03-01), pages 507-517, XP011096294 ISSN: 0196-2892 * the whole document * | 1-19 | |
| A,D | FORNARO G ET AL: "Spaceborne 3D SAR tomography: experiments with ers data" GEOSCIENCE AND REMOTE SENSING SYMPOSIUM, 2004. IGARSS '04. PROCEEDINGS . 2004 IEEE INTERNATIONAL ANCHORAGE, AK, USA 20-24 SEPT. 2004, PISCATAWAY, NJ, USA,IEEE, vol. 2, 20 September 2004 (2004-09-20), pages 1240-1243, XP010751086 ISBN: 978-0-7803-8742-3 * the whole document * -/-- | 1-19 | TECHNICAL FIELDS SEARCHED (IPC)<br><br>G01S |

The present search report has been drawn up for all claims

| Place of search | Date of completion of the search | Examiner |
|---|---|---|
| Munich | 20 November 2008 | Hirsch, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**Europäisches Patentamt**
**European Patent Office**
**Office européen des brevets**

# EUROPEAN SEARCH REPORT

**Application Number**

EP 08 42 5447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | LOMBARDINI F: "Differential Tomography: A New Framework for SAR Interferometry" IEEE TRANSACTIONS ON GEOSCIENCE AND REMOTE SENSING, IEEE SERVICE CENTER, PISCATAWAY, NJ, US, vol. 43, no. 1, 1 January 2005 (2005-01-01), pages 37-44, XP011125316 ISSN: 0196-2892 * the whole document * ----- | 1-19 | |
| A,D | GIANFRANCO FORNARO ET AL: "Imaging of Single and Double Scatterers in Urban Areas via SAR Tomography" IEEE TRANSACTIONS ON GEOSCIENCE AND REMOTE SENSING, IEEE SERVICE CENTER, PISCATAWAY, NJ, US, vol. 44, no. 12, 1 December 2006 (2006-12-01), pages 3497-3505, XP011150570 ISSN: 0196-2892 * the whole document * ----- | 1-19 | TECHNICAL FIELDS SEARCHED (IPC) |
| A,D | FERRETTI A, PRATI C, ROCCA F: "Nonlinear Subsidence Rate Estimation Using Permanent Scatterers in Differential SAR Interferometry" IEEE TRANSACTIONS ON GEOSCIENCE AND REMOTE SENSING, vol. 38, no. 5, September 2000 (2000-09), pages 2202-2212, XP002504735 * the whole document * ----- | 1-19 | |

-/--

The present search report has been drawn up for all claims

| Place of search | Date of completion of the search | Examiner |
|---|---|---|
| Munich | 20 November 2008 | Hirsch, Stefanie |

EPO FORM 1503 03.82 (P04C01)

Europäisches
Patentamt

European
Patent Office

Office européen
des brevets

# EUROPEAN SEARCH REPORT

Application Number

EP 08 42 5447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,Y | FORNARO G, LOMBARDINI F, PARDINI M, SERAFINO F, SOLDOVIERI F, COSTANTINI M: "Spaceborne Multi-Dimensional SAR Imaging: Current Status and Perspectives" IEEE GEOSCIENCE AND REMOTE SENSING SYMPOSIUM, 23 July 2007 (2007-07-23), pages 5277-5280, XP002504736 * the whole document * ----- | 1-19 | |

TECHNICAL FIELDS
SEARCHED    (IPC)

The present search report has been drawn up for all claims

| Place of search | Date of completion of the search | Examiner |
|---|---|---|
| Munich | 20 November 2008 | Hirsch, Stefanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. FORNARO ; F. SERAFINO ; F. SOLDOVIERI.** Three Dimensional Focusing With Multipass SAR Data. *IEEE Trans. Geosci. Remote Sens.,* 2003, vol. 41, 507-517
- **G. FORNARO ; F. SERAFINO.** Imaging of Single and Double Scatterers in Urban Areas via SAR Tomography. *IEEE Trans. Geosci. Remote Sens.,* December 2006, vol. 44 (12), 3497-35059

- **A. FERRETTI ; C., PRATI ; F. ROCCA.** Nonlinear subsidence rate estimation using the permanent scatterers in differential SAR interferometry. *IEEE Trans. Geosci. Remote Sens.,* 2000, vol. 38 (5), 2202-2212
- **F. LOMBARDINI.** Differential Tomography: a New Framework for SAR Interferometry. *IEEE Trans. Geosci. Remote Sens,* January 2005, vol. 43 (1), 37-44